Europäisches Patentamt

European Patent Office

Office européen des brevets

(11) Numéro de publication : **0 438 326 A1**

## (12) DEMANDE DE BREVET EUROPEEN

(21) Numéro de dépôt : 91400022.9

(22) Date de dépôt : 08.01.91

(51) Int. Cl.⁵ : **B01D 53/34**

(30) Priorité : 19.01.90 FR 9000598

(43) Date de publication de la demande :
24.07.91 Bulletin 91/30

(84) Etats contractants désignés :
AT BE CH DE DK ES FR GB GR IT LI LU NL SE

(71) Demandeur : Leloup, Roger
312 Chemin des Sables
F-78670 Villennes-sur-Seine (FR)

(72) Inventeur : Leloup, Roger
312 Chemin des Sables
F-78670 Villennes-sur-Seine (FR)

(74) Mandataire : Bernasconi, Jean et al
CABINET LEMOINE ET BERNASCONI 13,
Boulevard des Batignolles
F-75008 Paris (FR)

(54) Procédé de traitement de fumées, dispositif pour sa mise en oeuvre et installation s'y rapportant.

(57) Dans le procédé de traitement de fumées, notamment de fumées provenant de fours d'incinération d'ordures ménagères, du type dans lequel on utilise une matière solide pour retenir par réaction chimique les composés acides contenus dans les fumées, notamment acide chlorhydrique, acide fluorhydrique, anhydride sulfurique, anhydride sulfureux, pour l'élimination notamment du chlore, du soufre et du fluor, on met les fumées à haute température en contact avec des blocs de calcaire dans un réacteur (1).

EP 0 438 326 A1

# PROCEDE DE TRAITEMENT DE FUMEES, DISPOSITIF POUR SA MISE EN OEUVRE ET INSTALLATION S'Y RAPPORTANT

L'invention concerne un procédé de traitement de fumées, notamment de fumées provenant de fours d'incinération d'ordures ménagères. Elle concerne également un dispositif pour la mise en oeuvre de ce procédé ainsi qu'une installation s'y rapportant.

Le brevet FR-A-2.572.659 décrit une installation pour le traitement des fumées par un produit pulvérulent, notamment de la chaux, destiné à absorber une partie des polluants gazeux contenus dans les fumées. Dans cette installation, on effectue, dans une colonne de réaction verticale, une mise en suspension du produit en poudre dans les fumées, s'accompagnant d'un mouvement ascensionnel de la suspension obtenue, puis la séparation des fumées et du produit en poudre.

L'utilisation de chaux pulvérulente présente l'inconvénient de nécessiter une dépense énergétique importante pour fabriquer la chaux à partir de calcaire et la broyer de façon à obtenir un produit fin utilisable. En outre, il est nécessaire de séparer ensuite les fumées et la poudre en suspension.

Il en est de même dans le cas de la demande de brevet FR-A-2.587.238 qui décrit un procédé pour le traitement des effluents chlorés provenant de l'incinération des ordures ménagères, dans lequel on met en suspension dans les effluents des particules de réactif de neutralisation, notamment de la chaux, en des quantités dosées en fonction de la teneur en gaz chlorhydrique de ces effluents.

La demande de brevet allemand DE-A-3 440 562 décrit un procédé de traitement de gaz brûlés dans lequel on fait passer les gaz dans un mélange de bloc de calcaire et de chaux éteinte pour l'élimination de l'anhydride sulfureux et des autres constituants, qui ne sont pas davantage identifiés, des gaz brûlés. Il est simplement précisé que l'anhydride sulfureux donne du sulfate de calcium et du gaz carbonique au contact du calcaire et de la chaux éteinte.

La demande de brevet FR-A-2.572.951 décrit un procédé de captation par voie semi-sèche de polluants contenus dans des fumées, en particulier d'anhydride sulfureux, par un produit de traitement basique pulvérulent, notamment de la chaux, que l'on met en suspension en présence d'eau dans un écoulement ascendant des fumées réalisé dans une colonne de réaction et de séchage.

Si le temps de séjour dans la colonne de réaction peut, selon ce document, être diminué par rapport aux procédés par voie sèche comme décrit précédemment et donc conduire à un moindre refroidissement des fumées dans la colonne, la perte de calories par addition d'eau n'en demeure pas moins non négligeable. Il y a donc une perte de calories susceptibles d'être récupérées par un échangeur de chaleur.

La demande de brevet allemand DE-A-3 319 516 décrit un procédé d'élimination du fluor contenu dans des gaz brûlés, dans lequel on fait passer les gaz brûlés à travers des couches de calcaire, sous forme de gravier ou de sable, qui sont animés d'un mouvement ondulé. Dans le même sens, la demande de brevet allemand DE-A-2 252 710 décrit un procédé d'élimination de l'acide chlorhydrique contenu dans des gaz brûlés, la réaction s'effectuant dans ce qu'on peut appeler un tourbillon de particules de calcaire. La mise en oeuvre de ces procédés est relativement coûteuse.

La demande de brevet FR-A-2.586.204 décrit un procédé de dépollution de fumées résultant de la combustion ou de l'incinération de produits, dans lequel, simultanément, on refroidit et on traite les fumées par une action mécanique et une action physico-chimique, par aspersion avec un liquide de lavage et par condensation des acides et de la vapeur d'eau sur une paroi froide, puis on réchauffe ces fumées avant de les filtrer et de les rejeter à l'atmosphère. Ce procédé ne permet pas de récupérer de façon satisfaisante les calories des fumées à l'aide d'un échangeur de chaleur.

Enfin, le brevet américain US-A-4 301 137 décrit un procédé d'épuration de fumées issues de la pyrolyse de déchets organiques solides. Ce procédé se contente d'éliminer les hydracides contenus dans les fumées, notamment acide chlorhydrique et acide fluorhydrique. Cette élimination est effectuée en mettant les fumées en présence de carbonate de calcium, celui-ci pouvant être sous forme de masse fluidifiée ou de matrice poreuse.

L'invention a donc pour objectif de remédier aux inconvénients des procédés antérieurs cités ci-dessus en fournissant un procédé de traitement des fumées qui permette d'obtenir un épuration économique des fumées provenant notamment de fours d'incinération d'ordures ménagères, notamment de manière à les mettre au moins en conformité avec les normes anti-pollution les plus récentes et notamment avec les futures normes européennes citées en annexe à la présente demande, tout en permettant une récupération optimale des calories présentes à la sortie du four.

Un autre objectif de l'invention est de fournir un procédé qui soit facile à mettre en oeuvre et ne nécessite pas l'emploi de matière pulvérulente pour traiter les fumées.

Un autre objectif de l'invention est de fournir un dispositif pour mettre en oeuvre ce procédé, qui soit facile à réaliser, peu compliqué et peu onéreux.

Un autre objectif encore de l'invention est de fournir une installation de traitement qui puisse fonctionner en continu.

L'invention a pour objet un procédé de traitement de fumées, notamment de fumées provenant de fours d'incinération d'ordures ménagères, du type dans lequel on utilise une matière solide pour retenir par réaction chimique les composés acides contenus dans les fumées, notamment acide chlorhydrique, acide fluorhydrique, anhydride sulfurique, anhydride sulfureux, pour l'élimination notamment du chlore, du soufre et du fluor, caractérisé en ce que dans un réacteur, on met les fumées à haute température en contact avec des blocs de calcaire.

Les composés gazeux chlorhydriques, fluorhydriques, sulfuriques et sulfureux réagissent directement avec le calcaire pour donner des sels (chlorures, fluorures et sulfates de calcium).

De préférence, cela est réalisé sur des fumées ayant sensiblement la température de sortie du four. Cette température peut être, de préférence, inférieure ou égale à 850°C, mais elle peut être également supérieure à 850°C. La température doit notamment être supérieure à la température de condensation.

Ce procédé représente une grande économie de moyens et d'énergie :
- pas de pertes de calories par dilution des gaz chauds dans l'air froid ou par addition d'eau,
- par de dépense énergétique pour fabriquer de la chaux à partir de calcaire ni pour broyer de façon à obtenir un produit suffisamment fin pour réaliser une suspension dans les fumées.

En outre, la plus grande partie des métaux lourds et des poussières sont arrêtés dans les chicanes constituées par l'empilement de blocs de calcaire.

De préférence, les blocs proviennent de calcaire grossièrement broyé et ont des dimensions comprises notamment entre 20 et 400 mm environ.

Dans le mode de réalisation le plus avantageux, on fait passer les fumées de haut en bas dans le réacteur de façon à limiter l'affaissement de la garniture de calcaire qui est progressivement dégradée par les réactions chimiques dont elle est le siège.

On peut aussi faire circuler les fumées de bas en haut ou horizontalement.

De préférence, on filtre les fumées de façon à arrêter le mercure.

Dans ce procédé, on récupère avantageusement au moins en partie les calories à la sortie du réacteur en faisant passer les fumées dans un échangeur de chaleur approprié ou dans un groupe d'échangeurs de chaleur, sans risque sensible de corrosion du ou des échangeurs. On peut cependant récupérer ces calories en amont du réacteur.

De préférence, on assure un écoulement forcé des fumées dans le réacteur, à travers les éventuels moyens de filtration et dans l'échangeur de chaleur.

L'invention a également pour objet un dispositif pour la mise en oeuvre du procédé décrit ci-dessus, caractérisé en ce qu'il comporte un réacteur destiné à être raccordé à la sortie d'au moins un four ou analogue et contenant un empilement de blocs de calcaire, des moyens pour arrêter le mercure éventuellement présent dans les fumées, au moins un échangeur de chaleur placé de préférence en aval du réacteur et des moyens pour assurer une circulation forcée des fumées. L'échangeur de chaleur peut toutefois être placé en amont du réacteur.

De préférence, le réacteur est garni de blocs provenant de calcaire grossièrement broyé et ayant des dimensions comprises notamment entre 20 et 400 mm environ.

De préférence, le réacteur est vertical et la circulation des fumées dans le réacteur se fait de haut en bas. La circulation peut bien sûr aussi se faire de bas en haut. En variante, le réacteur peut aussi être horizontal pour une circulation horizontale des fumées.

Les moyens pour arrêter le mercure comprennent de préférence un filtre à mercure, fait notamment de tournures ou de fils d'aluminium, placé avant la cheminée d'évacuation des fumées traitées et refroidies, en aval du ou des échangeurs de chaleur.

Les moyens pour assurer une circulation forcée des fumées sont avantageusement des ventilateurs appropriés créant une dépression dans le dispositif selon l'invention.

L'invention a encore pour objet une installation pour assurer l'épuration de fumées provenant d'installations à feu continu. Cette installation d'épuration comporte au moins deux dispositifs ou au moins deux réacteurs selon l'invention fonctionnant par intermittence afin de permettre la régénération de la garniture active du réacteur dont le cycle de fonctionnement vient de se terminer et, éventuellement, des moyens de filtration.

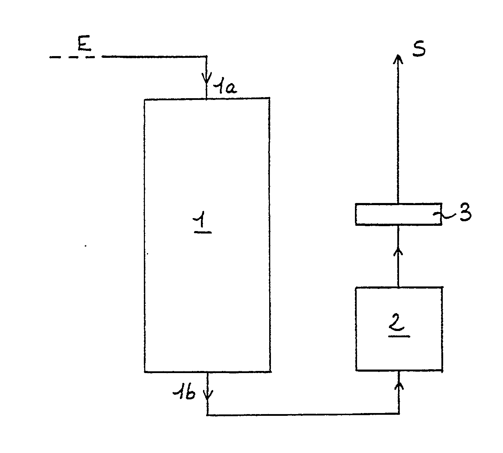

L'invention va être maintenant décrite plus en détail à l'aide d'un dispositif selon l'invention, mettant en oeuvre le procédé selon l'invention et pris à titre d'exemple non limitatif. On se réfère à la figure unique annexée, qui représente schématiquement ledit dispositif selon l'invention.

Le dispositif comprend un réacteur ou tour d'épuration 1 entièrement rempli de blocs de calcaire de dimensions comprises entre 20 et 400 mm environ. Le réacteur est disposé verticalement et comprend une entrée 1a à son sommet et une sortie 1b à sa base.

L'entrée 1a du réacteur 1 est raccordée à un conduit d'entrée E provenant directement de la sortie d'un four d'incinération d'ordures ménagères (non représenté).

La sortie 1b du réacteur 1 est raccordée à un échangeur de chaleur 2, lui-même raccordé à un moyen de filtration 3 destiné à arrêter le mercure et constitué de tournures ou de fils d'aluminium.

A sa sortie, le moyen de filtration 3 est raccordé à une sortie S constituée par une cheminée d'évacuation (non représentée) des fumées refroidies et épurées.

Les fumées sortant du four d'incinération entrent dans le réacteur 1 par l'entrée 1a et circulent de haut en bas dans le réacteur 1, entre les blocs de calcaire. Le chlore, le fluor et le soufre contenus dans les fumées sont retenus par réaction chimique avec le calcaire en formant des chlorures, des fluorures et des sulfates de calcium. Les poussières et les métaux lourds sont arrêtés dans les chicanes constituées par l'empilement de blocs de calcaire.

Les fumées ainsi traitées sortent du réacteur 1 par la sortie inférieure 1b pour entrer dans l'échangeur de chaleur 2 dans lequel elles perdent une partie de leurs calories. Le traitement préalable des fumées empêche sensiblement la corrosion de l'échangeur par les acides présents dans les fumées à la sortie du four.

Les fumées traitées et froides passent ensuite dans le moyen de filtration 3 arrêtant le mercure éventuellement présent dans lesdites fumées.

Les fumées peuvent alors être rejetées à l'atmosphère en conformité au moins avec les normes anti-pollution les plus récentes et notamment avec les futures normes européennes ci-annexées.

Pour une installation d'incinération à feu continu, on utilise deux réacteurs ou deux dispositifs tels que décrits ci-dessus, que l'on fait fonctionner alternativement, afin de permettre le renouvellement de la garniture de calcaire du réacteur dont le cycle de fonctionnement s'est achevé.

Enfin, le produit de réaction (notamment chlorure de calcium) chargé de poussières et de métaux lourds est utilisable comme additif des bétons, les éléments indésirables tels que halogènes, soufre et métaux lourds se trouvant bloqués dans des structures insolubles.

Bien que l'invention ait été décrite à propos d'un mode de réalisation, il est bien entendu qu'elle n'y est nullement limitée et qu'elle en englobe les variantes qui sont à la portée des spécialistes.

ANNEXE.

Futures normes européennes.

1) Fours dont la puissance P < 1 t/h :

– Poussières totales : 200 mg/Nm3, avec dérogation possible à 500 mg/Nm3 si population < 35 habitants par km2 et distances > à 40 km d'une grande usine.
– HCl : 250 mg/Nm3.
– Métaux lourds : néant.

2) Fours 1 t/h < P < 3t/h :

– Poussières totales : 100 mg/Nm3
– HCl : 100 mg/Nm3
– Métaux lourds :

Pb + Cr + Cu + Mn = 5 mg/Nm3
Ni + As = 1 mg/Nm3
Cd + Ag = 0,2 mg/Nm3
– Acide fluorhydrique : 4 mg/Nm3
– $SO_2$ : 300 mg/Nm3

## Revendications

1. Procédé de traitement de fumées, notamment de fumées provenant de fours d'incinération d'ordures ménagères, du type dans lequel on utilise une matière solide pour retenir par réaction chimique les composés acides contenus dans les fumées, notamment acide chlorhydrique, acide fluorhydrique, anhydride sulfurique, anhydride sulfureux, pour l'élimination notamment du chlore, du soufre et du fluor, caractérisé en ce que, dans un réacteur (1), on met les fumées à haute température en contact avec des blocs de calcaire.

2. Procédé selon la revendication 1, caractérisé en ce que les fumées sont sensiblement à la température de sortie du four.

3. Procédé selon la revendication 1 ou 2, caractérisé en ce que les blocs proviennent de calcaire grossièrement broyé et ont des dimensions comprises notamment entre 20 et 400 mm environ.

4. Procédé selon l'une quelconque des revendications 1 à 3, caractérisé en ce qu'on fait passer les fumées de haut en bas dans le réacteur (1).

5. Procédé selon l'une quelconque des revendications 1 à 4, caractérisé en ce qu'on filtre les fumées de façon à arrêter le mercure.

6. Procédé selon l'une quelconque des revendications 1 à 5, caractérisé en ce que, de préférence après passage dans le réacteur (1), on récupère au moins en partie les calories des fumées par échange de chaleur.

7. Procédé selon l'une quelconque des revendications 1 à 6, caractérisé en ce qu'on assure un écoulement forcé des fumées.

8. Dispositif pour la mise en oeuvre du procédé selon l'une quelconque des revendications 1 à 7, caractérisé en ce qu'il comporte un réacteur (1) destiné à être raccordé à la sortie (E) d'un four ou analogue et contenant un empilement de blocs de calcaire, des moyens (3) pour arrêter le mercure éventuellement présent dans les fumées, au moins un échangeur de chaleur (2) placé de préférence en aval du réacteur (1) et des moyens pour assurer une circulation forcée des fumées.

9. Dispositif selon la revendication 8, caractérisé en ce que les blocs proviennent de calcaire grossièrement broyé et ayant des dimensions comprises notamment entre 20 et 400 mm environ.

10. Dispositif selon la revendication 8 ou 9, caractérisé en ce que le réacteur (1) est disposé verticalement et la circulation des fumées dans le réacteur (1) se fait de haut en bas.

11. Installation de traitement de fumées comportant au moins deux dispositifs selon l'une quelconque des revendications 8 à 10 et fonctionnant par intermittence.

E

S

1a

1

3

2

1b

EP 0 438 326 A1

Office européen
des brevets

**RAPPORT DE RECHERCHE EUROPEENNE**

Numero de la demande

EP 91 40 0022

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 301 137 (WILLIAMS et al.) * Revendications 1,2; colonne 6, lignes 24-64 * | 1 | B 01 D 53/34 |
| A | | 2,11 | |
| Y | DE-A-3 440 562 (SYKORA) * Le document complet * | 1 | |
| A | | 3,9 | |
| A | DE-A-2 252 710 (SCHULZ) * Pages 3-4; revendications 1-3 * | 1,2 | |
| A | DE-A-3 319 516 (HELLMICH) * Revendications; page 13, figure * | 1,2,7, 10 | |

**DOMAINES TECHNIQUES RECHERCHES (Int. Cl.5)**

B 01 D

Le présent rapport a été établi pour toutes les revendications

| Lieu de la recherche | Date d'achèvement de la recherche | Examinateur |
|---|---|---|
| LA HAYE | 25-04-1991 | CUBAS ALCARAZ J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

7